# EUROPEAN PATENT APPLICATION

(11) **EP 1 978 665 A2**
(43) Date of publication of application: **08.10.2008**
(21) Application number: 08152754.1
(22) Date of filing: 14.03.2008
(51) Int. Cl.: H04L 1/00

(54) **Systems, methods, and computer program products for automatically adjusting the modulation index of a wireless smart device reader**

(30) Priority: 20.06.2007 US 820795; 30.03.2007 US 921158 P
(71) Applicant: Vivotech, Inc., Santa Clara, CA 95050 (US)
(72) Inventor: Moullette, Bruce L., Modesto, CA 95358 (US); Song, Steve, San Ramon, CA 94582 (US); Jiao, Xuejun, San Jose, CA 95131 (US); Johnson, Jr., William S., Sunnyvale, CA 94086 (US); Bousfield, Bruce M., San Jose, CA 95124 (US); Wiese, John E., San Jose, CA 95128 (US)
(74) Representative: Skuhra, Udo

(57) **Abstract**

Systems, methods, and computer program products for automatically adjusting the modulation index of a wireless smart device reader are disclosed. According to one aspect, the subject matter described herein includes a method (performed at a wireless smart device reader) that includes receiving a signal from a wireless smart device. A parameter of the signal is determined. The method also includes determining at least one transmission parameter using the parameter of the signal. The transmission parameter(s) is applied to a transmitter of the wireless smart device reader in order to adjust the modulation index of the transmitter.

## Description

### RELATED APPLICATIONS

This application claims the benefit of U.S. Provisional Patent Application Serial No. 60/921,158, filed March 30, 2007; the disclosure of which is incorporated herein by reference in its entirety.

### TECHNICAL FIELD

The subject matter described herein relates to effecting contactless payment and other transactions using wireless smart devices. More particularly, the subject matter described herein relates to systems, methods, and computer program products for automatically adjusting the modulation index of a wireless smart device reader.

### BACKGROUND

With the success and widespread prevalence of the use of credit and debit cards for banking transactions, card issuers, such as banks and financial institutions, have turned to wireless smart devices as a means to provide their customers with a richer, more powerful set of features than is possible using a traditional magnetic stripe ("magstripe") credit card.

As used herein, the term "smart device" refers to a device with processing capabilities. A smart device may have on-board memory or other storage capacity, may be written to as well as read from, and may contain one or more applications that perform a particular function. Some smart devices may contain an operating system and/or user interface.

As used herein, the term "wireless smart device" refers to a smart device that can communicate wirelessly via an electric and/or magnetic field between the device and some other entity, usually a wireless terminal or reader (e.g., a contactless card reader or wireless smart device reader). Examples of wireless smart devices include contactless cards, contactless fobs, and mobile phones and PDAs provisioned with soft cards. One type of wireless communications that can be used between a wireless smart device and a wireless smart device reader is near field communications (NFC). In one form of near field communications, a wireless smart device may communicate with a wireless smart device reader via inductive coupling of the device reader antenna to the device antenna. Two loop antennas, one on the device and one on the device reader, effectively form a transformer to generate an electromagnetic field. The wireless smart device reader uses amplitude modulation (AM) to manipulate the radio frequency (RF), or electromagnetic, field in order to send information to the device. The device, in turn, communicates with the device reader by modulating the loading on the device antenna, which consequently modulates the load on the device reader antenna.

Some wireless smart devices used extensively by consumers typically require less than 100 percent modulation to read data transmitted by a wireless smart device reader. For example, an ISO 14443 type B card requires a nominal 10 percent modulation index (MI) for an incoming signal to be read correctly at the wireless smart device. As used herein, the term "modulation index" refers to an indicator of a relationship between a modulated signal and an unmodulated signal or function. In one instance, the modulation index may be represented as a percent difference ratio, e.g., the difference of the unmodulated amplitude and the modulated amplitude of the signal divided by the sum of the unmodulated amplitude and the modulated amplitude of the signal. In other words, modulation index equals (a-b)/(a+b), where "a" is the unmodulated amplitude and "b" is the modulated amplitude of the signal.

There are many factors that may cause the load on the reader antenna to vary. For example, various cards present different loads to the reader antenna as each of these cards move in the field towards the reader antenna (i.e., each card can be unique as to the load it presents to the reader antenna at a given distance in the field and as it moves within the field). This in turn causes the modulation index of the transmitted data to change due to the different load on the antenna. Consequently, these load changes on the antenna of the device reader can prevent type B cards from communicating with readers in some instances. Moreover, since there are several different types of cards being used by consumers, a static modulation index is not capable of optimally communicating with each and every card. If no attempt is made to control the fluctuating modulation index, some cards may not be read or received data can be misinterpreted. Thus, it may be desirable to adjust the modulation index in order to hold the transmitted modulation index at the correct value or within a predetermined range of values so as to accommodate the various cards that may possibly be presented to the device reader.

Accordingly, there exists a need for a system, method, and computer product for automatically adjusting the modulation index of a wireless smart device reader.

### SUMMARY

According to one aspect, the subject matter described herein includes a method for automatically adjusting the modulation index of a wireless smart device reader. The method, which is performed at a wireless smart device reader, includes receiving a signal from a wireless smart device. A parameter of the signal is determined. The method also includes determining at least one transmission parameter using the parameter of the signal. The transmission parameter(s) is applied to a transmitter of the wireless smart device reader in order to adjust the modulation index of the transmitter.

The subject matter described herein for automatically adjusting the modulation index of a wireless smart device reader may be implemented in hardware, software, firmware, or any combination thereof. As such, the terms "function" or "module" as used herein refer to hardware, software, and/or firmware for implementing the feature being described. In one exemplary implementation, the subject matter described herein may be implemented using a computer program product comprising computer executable instructions embodied in a computer readable medium. Exemplary computer readable media suitable for implementing the subject matter described herein include disk memory devices, chip memory devices, programmable logic devices, application specific integrated circuits, and downloadable electrical signals. In addition, a computer program product that implements the subject matter described herein may be located on a single device or computing platform or may be distributed across multiple devices or computing platforms.

### BRIEF DESCRIPTION OF THE DRAWINGS

Preferred embodiments of the subject matter described herein will now be explained with reference to the accompanying drawings of which:
Figure 1 is a block diagram illustrating an exemplary contactless payment system according to an embodiment of the subject matter described herein; and
Figure 2 is a message flow diagram illustrating the steps of an exemplary method for automatically adjusting the modulation index in a wireless smart device reader according to an embodiment of the subject matter therein; and
Figure 3 is a message flow diagram illustrating the steps of a second an exemplary method for automatically adjusting the modulation index in a wireless smart device reader according to an embodiment of the subject matter therein.

### DETAILED DESCRIPTION OF THE INVENTION

The subject matter described herein includes systems, methods, and computer program products for automatically adjusting the modulation index of a wireless smart device reader. As stated above, modulation index (MI) is an indicator of a relationship between an unmodulated and a modulated signal. In one embodiment, for AM signals, the modulation index may be determined by obtaining a measurement of the amplitude of the carrier signal with modulation and the amplitude of the carrier signal without the application of any modulation. These values may then be applied to a percent difference ratio in order to derive the modulation index. In one embodiment, the measurement of the modulated signal is acquired when the field strength sensor detects a zero data value, thereby dropping the signal to a certain percentage (e.g., 90 percent) of the height of the original waveform. The importance for adjusting the modulation index in relation to the present subject matter is described below.

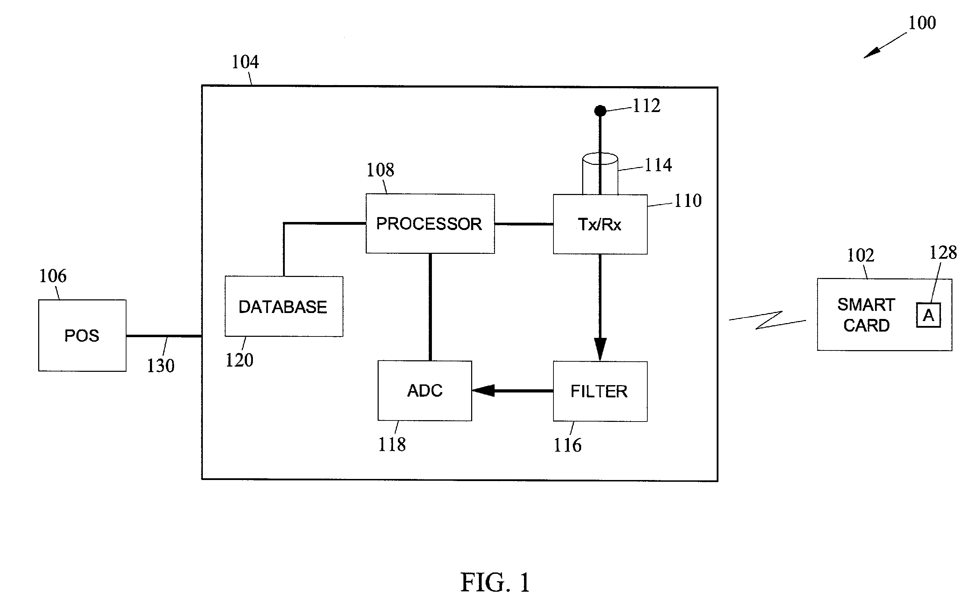

Figure 1 is a block diagram illustrating an exemplary contactless payment system **100** according to an embodiment of the subject matter therein. In one embodiment, system **100** may include a wireless smart device **102,** a wireless smart device reader **104,** and a point of sale (POS) unit **106.** Wireless smart device **102** may include a radio frequency identification (RFID) card, a credit card with an embedded wireless chip, and any other like card capable of supporting wireless or contactless payment transactions. In one embodiment, a wireless smart device (e.g., MasterCard PayPass^{®} card) does not require an electromagnetic stripe, but instead may include an embedded chip (e.g., a secure microcontroller or like device), internal memory, and a small antenna **128.** Wireless smart device technology is used in applications that require the protection of personal information as well as delivering fast, secure transactions (e.g., transit fare payment cards, vending machine purchases, etc.) via RF technology. Wireless smart devices have the ability to securely manage, store and provide access to data on the card, perform on-card functions (e.g., encryption) and interact intelligently with a wireless smart device reader. Wireless smart device technology is available in a variety of forms, such as plastic cards, key fobs, and other handheld devices (e.g., built into mobile phones). The chip in the contactless card may contain the same information held by the conventional electromagnetic stripe of a credit card or debit card.

Wireless smart device reader **104** may include any contactless card reader (e.g., a wireless RFID reader) that is capable of reading wireless smart cards or any other contactless payment type cards. In one embodiment, device reader **104** includes a processing unit **108,** a transceiver unit **110,** a filter **116,** an analog-to-digital converter (ADC) **118,** and a database **120.** Processing unit **108** may include any processor, microcontroller, or central processing unit (CPU) that is capable of executing computer programs (e.g., software, firmware, etc.) that control the card reading functions. In one embodiment, processing unit **108** may include an embedded ARM based processor (e.g., an ARM7 processor) that is configured to execute firmware programs (e.g., written in C language) for operating device reader **104.**

Transceiver unit **110** may include any device, such as a radio controller chip, that is capable of transmitting radio frequency (RF) signals to (and receiving RF signals from) wireless smart device **102.** In one embodiment, transceiver unit **110** is the component in device reader **104** that is responsible for controlling and monitoring an antenna **112** and a field strength sensor **114.** Antenna **112** may include a transducing element that transmits an electromagnetic field. Antenna **112** may use the electromagnetic field to establish a connection to a built-in antenna **128** on wireless smart device **102.** Namely, device **102** is able to draw power from the generated electromagnetic field and transmit a signal to device reader **104.** In one embodiment, antenna **112** may include a closed loop antenna or the like. Field strength sensor **114** is a component that enables transceiver unit **110** to measure the intensity of the electromagnetic field produced by device reader **104.** The generated electromagnetic field may fluctuate depending on the proximity of wireless smart device **102** to antenna **112.** In one embodiment, the field strength sensor **114** may include a ferrite coil or sensor wrapped around (e.g., attached to at least one lead of) antenna **112.** For example, one end of field strength sensor **114** may be grounded, while the other end is coupled to analog-to-digital converter (ADC) **118.**

In order to communicate with smart device **102,** transceiver unit **110** utilizes amplitude modulation (AM) to transmit signals via the electromagnetic field (i.e., a detector field). In one embodiment, the electromagnetic field is oscillating at 13.56 MHz. By turning an electromagnetic field on and off very quickly (e.g., by quickly switching power on and off), transceiver unit **110** is able to send a string of data to a wireless smart device **102.** Similarly, by drawing power from the generated electromagnetic field, device **102** is able to respond to device reader **104** by creating a short circuit on its own antenna **128.** The short circuit produces a larger load on antenna **112,** which is readily detected and interpreted by field strength sensor **114** as a communication from device **102.**

Filter **116** may include any electronic circuit device that is capable of suppressing unwanted frequencies or noise. In one embodiment, filter **116** may be a bandpass filter to filter the received 13.56 MHz waveform in a manner such that only the peaks of a signal's waveform envelope may be identified, as opposed to the waveform's cycles.

Analog-to-digital converter (ADC) **118** may include an electronic circuit that converts continuous analog signals to discrete digital numbers. Namely, analog information is transmitted by modulating a continuous transmission signal by amplifying a signal's strength or varying its frequency to add or take away data. Digital information describes any system based on discontinuous data or events. Computers, which handle data in digital form, require analog-to-digital converters to turn signals from analog to digital before it can be read. Although Figure 1 depicts ADC **118** as a standalone component, ADC **118** may be integrated as a part of processing unit **108.**

Database **120** may include any memory structure for holding data, such as memory, and the like. In one embodiment, database **120** may be a table that contains transmission parameters for adjusting the RF gain stage of device reader **104.** These radio parameters may include values that are set in transceiver unit **110** that affects the modulation index of device reader **104.** These parameters may be predefined binary numbers that are placed in the table.

Point of sale (POS) unit **106** may include any point-of-sale location or terminal, such as a cash register and the like. In one embodiment, POS unit **106** is coupled to device reader **104** via a communications cable **130.**

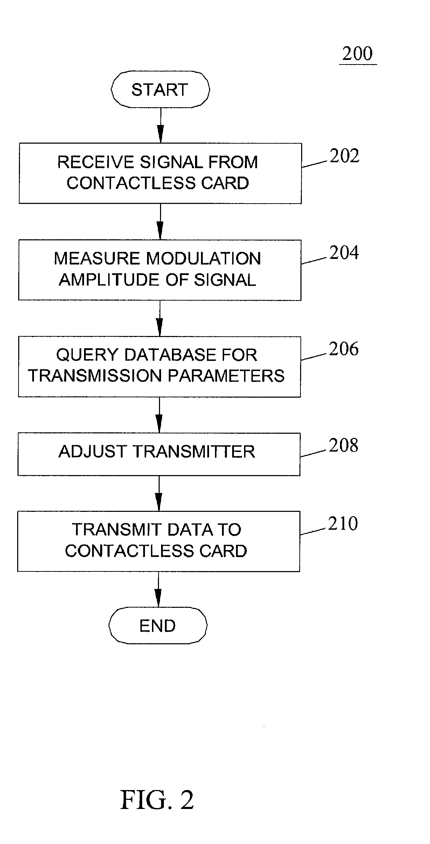

Figure 2 is a flow diagram illustrating the steps of an exemplary method **200** for automatically adjusting the modulation index of a contactless card according to an embodiment of the subject matter described herein. Although Figure 2 is a simplified illustration of a modulation index adjustment with regard to ISO 14443 card types, the use of other card types is entirely within the scope of the subject matter described herein. Referring to Figure 2, in block **202,** a wireless smart device reader receives a signal from wireless smart device. In one embodiment, device reader **104** generates an electromagnetic field that is transmitted by antenna **112.** Wireless smart device **102** is placed within the electromagnetic field of device reader **104** (e.g., swiping a card for a payment transaction) which allows for a signal to be transmitted from device **102** to device reader **104.** Specifically, when wireless smart device **102** is placed within the electromagnetic field, device **102** acquires the requisite power needed to send data to the reader **104** from the electromagnetic field. The transmitted data may be account information, personal data, or the like. In one embodiment, device **102** transmits data by creating a temporary short circuit antenna **128,** which then increases the load on antenna **112.** Load changes are detected by field strength sensor **114** and are interpreted as different binary numbers. In some embodiments, smart device **102** may perform an initialization process or perform a handshaking procedure with the device reader **104.**

In block **204,** a signal parameter, such as the amplitude of the received signal, is measured. In one embodiment, field strength sensor **114** reads the amplitude of the signal (i.e., a signal parameter) received from device **102** (via antenna **112).** Furthermore, field strength sensor **114** may read and subsequently filter the signal, which may initially be received as a full 13.56 MHz waveform that is difficult to interpret. Namely, transceiver unit **110** may be configured to use filter **116** to condition the received signal in a manner in which only the peaks of the envelopes are successfully passed. This filtering process allows for the determination of the absolute height of the waveform.

In block **206,** a database is queried for transmission parameters. In one embodiment, processing unit **108** receives digital signal data (via filter **116** and ADC **118)** and queries database **120** in order to determine the transmission parameters (e.g., radio chip parameter settings) that are needed to adjust the modulation index to the optimal level for reading wireless smart device **102.** In one embodiment, database **120** may include a predefined table that maps carrier amplitudes to a predefined set of transmission parameters (or at least one transmission parameter) for a radio chip transceiver unit.

In block **208,** the transceiver unit **110** is adjusted. In one embodiment, the processing unit **108** adjusts the gain of the transceiver's RF stage so that a correct modulation index is utilized. Specifically, processing unit **108** adjusts the settings of the transceiver unit **110** in accordance with the transmission parameters so that the transceiver's gain setting produces the necessary modulation index, which will enable the device reader **104** to optimally communicate with wireless smart device **102.**

In block **210,** data is transmitted. In one embodiment, transceiver unit **110** transmits a signal to device **102** at the new modulation index setting. For example, the signal may be a command requesting data from wireless smart device **102.** Because the transceiver is transmitting the signal at the ideal modulation index, device **102** is able to receive the signal without any difficulty. The method **200** then ends.

In one embodiment, processing unit **108** samples the received waveform on a continual basis in order to determine the requisite gain that controls modulation index in a closed loop manner. In such an implementation, processing unit **108** re-measures the signal's parameters and continually calculates or looks up the requisite gain to maintain a desired modulation index.

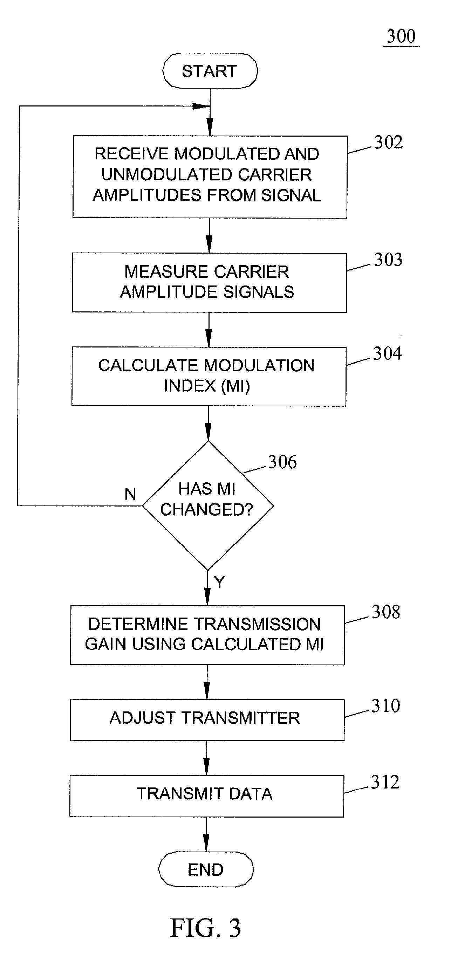

In the example illustrated in Figure 2, processing unit **108** may be configured to query database **120** for transmission parameters on a continual basis (in response to sampling the received signal from device **102** on a continual basis). Similarly, instead of querying a database, processing unit 108 may be adapted to calculate the modulation index on a continual basis as the signal from device **102** is received. For example, this process is depicted in Figure 3, which is a flow diagram illustrating the steps of a second exemplary method **300** for automatically adjusting the modulation index of a contactless card according to an embodiment of the subject matter described herein. Although Figure 3 is a simplified illustration of a modulation index adjustment in regard to ISO 14443 card types, the use of other card types is entirely within the scope of the subject matter described herein. Referring to Figure 3, in block **302,** a wireless smart device reader receives a signal from wireless smart device **102.** In one embodiment, device reader **104** generates an electromagnetic field that is transmitted by antenna **112.** Wireless smart device **102** is placed within the electromagnetic field of device reader **104** (e.g., a card swiping payment transaction) which allows for the signal to be sent from device **102** to device reader **104.**

In block **303,** the amplitude of the received signal is measured. In one embodiment, field strength sensor **114** reads the carrier amplitudes (i.e., the unmodulated carrier amplitude and the modulated carrier amplitude) of the signal received from device **102** (via antenna **112).** For example, field strength sensor **114** may read and subsequently filter both the unmodulated carrier amplitude and the modulated carrier amplitude from the received signal. Namely, transceiver unit **110** may be configured to use filter **116** to condition the received signals in a manner in which only the peaks of the envelopes of the unmodulated carrier amplitude and modulated carrier amplitude are successfully passed.

In block **304,** the modulation index (MI) is calculated. In one embodiment, processing unit **108** applies the unmodulated and modulated carrier amplitude values to a formula to determine the modulation index. For example, the modulation index may be determined by using the formula MI=(a-b)/(a+b), where "a" is the unmodulated carrier amplitude and "b" is the modulated carrier amplitude. Once the modulation index is calculated, the modulation index value is stored by processing unit **108** for future reference.

In block **306,** a determination is made as to whether the modulation index has changed from a previous value. In one embodiment, processing unit **108** compares the current calculated value of the modulation index with a previously stored calculated modulation index value. If the two modulation index values do not differ (e.g., do not differ by a predefined threshold percentage), then the processing unit **108** deems the current modulation index as sufficient to communicate with wireless smart device **102** and method **300** loops back to block **302.** Alternatively, if the modulation index values differ (e.g., exceed the predefined threshold percentage), method **300** proceeds to block **308** for further processing.

In block **310,** the transceiver unit **110** is adjusted. In one embodiment, the processing unit **108** adjusts the gain setting (e.g., transmission gain setting) of the transceiver's RF stage in accordance with the calculated modulation index. This causes antenna **112** to be adjusted so that the new designated modulation index enables the device reader **104** to optimally communicate with device **102.**

In block **312,** data is transmitted. In one embodiment, transceiver unit **110** transmits a signal to device **102** using the new modulation index. For example, the signal may be a command requesting data from wireless smart device **102.** Because the transceiver is transmitting the signal at the ideal modulation index, device **102** is able to communicate with device reader **104** without any difficulty. Method **300** then ends.

It will be understood that various details of the subject matter described herein may be changed without departing from the scope of the subject matter described herein. Furthermore, the foregoing description is for the purpose of illustration only, and not for the purpose of limitation.

## Claims

1. A method for automatically adjusting a modulation index of a wireless smart device reader, the method comprising:
at a wireless smart device reader:
receiving a signal from a wireless smart device;
determining a parameter of the signal;
determining at least one transmission parameter using the parameter of the signal; and
applying the at least one transmission parameter to a transmitter of the wireless smart device reader to adjust a modulation index of the transmitter.

2. The method of claim 1 wherein the parameter of the signal comprises an amplitude of the signal.

3. The method of claim 1 wherein the at least one transmission parameter comprises a radio transmission gain setting for the transmitter.

4. The method of claim 1 wherein determining at least one transmission parameter includes querying a database that maps the parameter to the at least one transmission parameter.

5. The method of claim 1 wherein determining the at least one transmission parameter includes calculating the at least one transmission parameter from a difference between the modulation index of the received signal and a desired modulation index.

6. The method of claim 1 wherein the wireless smart device comprises one of a contactless card, a contactless fob, and a mobile phone or a personal digital assistant (PDA) provisioned with a soft card.

7. The method of claim 1 wherein determining the parameter of the signal includes:
filtering the signal to obtain amplitude peak data from the signal; and
converting the amplitude peak data into digital data to be used to determine the at least one transmission parameter.

8. The method of claim 7 wherein filtering the signal includes filtering using a 13.56 MHz bandpass filter.

9. The method of claim 1 wherein the signal comprises a modulated signal that includes a modulated amplitude and an unmodulated amplitude, wherein the method further comprises calculating a modulation index for the transmitter using the unmodulated amplitude and the modulated amplitude, and the at least one transmission parameter is determined using the calculated modulation index.

10. The method of claim 9 wherein the modulation index is determined by calculating (a-b)/(a+b), wherein a represents the unmodulated amplitude and b represents the modulated amplitude.

11. The method of claim 9 wherein the at least one transmission parameter comprises a transmission gain setting for the transmitter.

12. The method of claim 9 wherein the wireless smart device comprises one of a contactless card, a contactless fob, and a mobile phone or a personal digital assistant (PDA) provisioned with a soft card.

13. The method of claim 9 wherein the calculating step is performed only if the modulation index differs from a previously stored modulation index.

14. The method of claim 1 comprising continually receiving the signal and adjusting the at least one transmission parameter based on the parameter of the signal to control the value of the modulation index in a closed loop manner.

15. The method of claim 9 wherein the signal is filtered to determine each of the unmodulated amplitude and the modulated amplitude.

16. The method of claim 15 wherein the signal is filtered using a 13.56 MHz bandpass filter.

17. A wireless smart device reader for automatically adjusting a modulation index comprising:
a transceiver for receiving a signal from a wireless smart device; and
a processing unit for determining a parameter of the signal, determining at least one transmission parameter using the parameter of the signal, and applying the at least one transmission parameter to the transceiver to adjust a modulation index of the transceiver.

18. The wireless smart device reader of claim 17 wherein the parameter of the signal comprises an amplitude of the signal.

19. The wireless smart device reader of claim 17 wherein the at least one transmission parameter comprises a radio transmission gain setting for the transceiver.

20. The wireless smart device reader of claim 17 wherein the wireless smart device is adapted to query a database that maps the parameter in the signal to the at least one transmission parameter.

21. The wireless smart device reader of claim 17 wherein the wireless smart device reader is adapted to calculate the at least one transmission parameter from a difference between the modulation index of the received signal and a desired modulation index.

22. The wireless smart device reader of claim 17 wherein the wireless smart device comprises one of a contactless card, a contactless fob, and a mobile phone or a personal digital assistant (PDA) provisioned with a soft card.

23. The wireless smart device reader of claim 17 wherein the wireless smart device is adapted to:
filter the signal to obtain amplitude peak data from the signal; and
convert the amplitude peak data into digital data to be used to determine the at least one transmission parameter.

24. The wireless smart device reader of claim 23 wherein the wireless smart device is further adapted to filter the signal using a 13.56 MHz bandpass filter.

25. The wireless smart device reader of claim 17 wherein the signal comprises a modulated signal that includes a modulated amplitude and an unmodulated amplitude, wherein the processing unit is adapted to calculate a modulation index using the unmodulated amplitude and the modulated amplitude, and the processing unit is adapted to determine the at least one transmission parameter using the calculated modulation index.

26. The wireless smart device reader of claim 25 wherein the processing unit is adapted to determine the modulation index by calculating (a-b)/(a+b), wherein a represents the unmodulated amplitude and b represents the modulated amplitude.

27. The wireless smart device reader of claim 25 wherein the at least one transmission parameter comprises a transmission gain setting for the transceiver.

28. The wireless smart device reader of claim 25 wherein the wireless smart device comprises one of a contactless card, a contactless fob, and a mobile phone or a personal digital assistant (PDA) provisioned with a soft card.

29. The wireless smart device reader of claim 17 wherein the processing unit continually updates the at least one transmission parameter based on the parameter of the signal to control the value of the modulation index in a closed loop manner.

30. The wireless smart device reader of claim 25 wherein the signal is filtered to determine each of the unmodulated amplitude and the modulated amplitude.

31. The wireless smart device reader of claim 30 wherein the signal is filtered using a 13.56 MHz bandpass filter.

32. A computer program product comprising computer executable instructions embodied in a computer readable medium for performing steps comprising:
at a wireless smart device reader:
receiving a signal from a wireless smart device;
determining a parameter of the signal;
determining at least one transmission parameter using the parameter of the signal; and
applying the at least one transmission parameter to a transmitter of the wireless smart device reader to adjust a modulation index of the transmitter.
